Europäisches Patentamt

European Patent Office

Office européen des brevets

(19)

(11) Veröffentlichungsnummer: **0 283 698 B1**

# EUROPÄISCHE PATENTSCHRIFT

(12)

(45) Veröffentlichungstag der Patentschrift: **06.11.91**

(51) Int. Cl.⁵: **B23B 51/06**

(21) Anmeldenummer: **88101952.5**

(22) Anmeldetag: **10.02.88**

(54) **Innengekühltes Bohrwerkzeug aus Werkzeugspirale und Spannschaft.**

(30) Priorität: **26.03.87 DE 8704477 U**

(43) Veröffentlichungstag der Anmeldung:
**28.09.88 Patentblatt 88/39**

(45) Bekanntmachung des Hinweises auf die
Patenterteilung:
**06.11.91 Patentblatt 91/45**

(84) Benannte Vertragsstaaten:
**CH DE ES FR GB IT LI**

(56) Entgegenhaltungen:
**DE-B- 1 602 750**

(73) Patentinhaber: **GOTTLIEB GÜHRING KG**
**Herderstrasse 50-54**
**W-7470 Albstadt 1-Ebingen(DE)**

(72) Erfinder: **Reinauer, Josef**
**Weidenweg 23**
**W-7480 Sigmaringen(DE)**

(74) Vertreter: **Winter, Konrad Theodor, Dipl.-Ing.**
**et al**
**Rieder & Partner Patentanwälte Sendlinger**
**Strasse 35**
**W-8000 München 2(DE)**

## Beschreibung

Die Erfindung bezieht sich auf ein innengekühltes Bohrwerkzeug aus Werkzeugspirale und Spannschaft. Unter dem Begriff "Werkzeugspirale" ist dabei ein mit wendelförmigen Spannuten ausgestattes Schneidteil zu verstehen, an dem die Haupt- und die Nebenschneide ausgebildet sind.

In der älteren europäischen Patentanmeldung EP-A-240 765 (Veröffentlichungstag vom 14. Oktober 1987), die Wirkung nach Artikel 54 (3) und (4) hat, wird bereits eine Verbindungstechnik vorgeschlagen, um eine beispielsweise aus Hartmetall bestehende Werkzeugspirale mit geringem Aufwand derart mit einem Spannschaft zu verbinden, daß eine störungsfreie Kühlmittelzufuhr zu den innenliegenden Kühlkanälen ermöglicht wird, wobei eine möglichst geringe Beanspruchung der Verbindungsflächen angestrebt wird.

Dieser Lösungsvorschlag führt allerdings zu einer unlösbaren Verbindung zwischen der Hartmetallspirale und dem Spannschaft. Nach mehrmaligem Nachschleifen der Werkzeugspirale konnten nur noch Bohrungen mit reduzierter Tiefe hergestellt werden, was die Einsatzmöglichkeiten des Werkzeugs beschränkte.

Der Erfindung liegt deshalb die Aufgabe zugrunde, ein innengekühltes Bohrwerkzeug aus Werkzeugspirale und Spannschaft zu schaffen, bei dem die Werkzeugspirale wirtschaftlicher eingesetzt werden kann.

Diese Aufgabe wird durch die Merkmale des Patentanspruchs 1 gelöst.

Erfindungsgemäß wird die Werkzeugspirale lösbar unter Zuhilfenahme einer Spannzange am Spannschaft befestigt, wobei zur Verbesserung der Drehmomentenübertragung eine der Querschnittsgestaltung der Werkzeugspirale angepaßte Mitnehmerscheibe Verwendung findet, die über eine Klauenverbindung in der Spannzange aufgenommen ist. Auf diese Weise wird nicht nur für eine gute Mitnahme in Drehrichtung gesorgt, sondern es wird darüber hinaus die Voraussetzung dafür geschaffen, die Auskraglänge der Werkzeugspirale frei im Hinblick auf die Bohrlochtiefe einzustellen. Denn über die Justierschraube kann nach wie vor dafür gesorgt werden, daß eine sichere Abdichtung der Kühlkanäle gegen den Innenraum der Spannzange erfolgt. Der Raum hinter der Justierschraube kann damit frei zur Gestaltung als Kühl- oder Schmiermittel-Einlaßraum zur Verfügung gestellt werden, was die Möglichkeit eröffnet, das Bohrwerkzeug mit allen gängigen Kühlmittelzufuhrsystemen zu kombinieren, bei denen das Kühlmittel entweder axial oder radial am Schaft zugeführt wird.

Zwar ist aus der DE-A1-1 602 750 bereits ein Spannsystem für Spiralbohrer mit innenliegenden Kühlkanälen bekannt, bei dem der Spiralbohrer gegen eine in einem Werkzeug-Spannfutter aufgenommene Zwischenscheibe gedrückt wird, die sich an einer axial einstellbaren Mutter im Werkzeug abstützt. Das hierbei zu spannende Werkzeug ist allerdings nicht durchgängig mit wendelförmigen Nuten ausgebildet, sondern hat einen zylindrischen Schaftabschnitt, der somit in einen umlaufenden Flächenkontakt mit der Zwischenscheibe gelangt. Die im Spannfutter vorgesehene Spannzange wirkt darüber hinaus lediglich auf die Nebenschneiden des Werkzeugs ein, wodurch das maximal übertragbare Drehmoment begrenzt bleibt.

Schließlich ist aus dem Dokument DE-A1-3 315 661 ein Spannfutter für Schlagbohr-Werkzeuge bekannt, bei dem gemäß einer Ausführungsform Mitnehmer formschlüssig in die Spannuten eingreifen. Auch dieses Bohrwerkzeug hat zwei unterschiedlich gestaltete Abschnitte, nämlich einen mit Spannuten versehenen Schneidteil und einen vollzylindrischen Schaftteil, so daß ein Einsetzen des Bohrwerkzeugs in das Spannfutter nur dann möglich ist, wenn die Mitnehmer-Stollen radial nach außen zurückgefahren sind. Es ist dementsprechend im bekannten Fall eine verhältnismäßig aufwendige Mechanik zur Bewegung der Mitnehmer erforderlich, die zwangsläufig zu einer Schwächung des Spannfutters und damit zu einer Reduzierung des maximal übertragbaren Drehmomentes führt.

Vorteilhafte Weiterbildungen sind Gegenstand der Unteransprüche.

Wenn die Backen der Spannzange gemäß Patentanspruch 2 ausgebildet sind, ergibt sich eine gleichmäßigere Klemmung über die gesamte Länge der Spannzange. Es hat sich gezeigt, daß die radiale Elastizität der Spannzange groß genug ist, um die Werkzeugspirale von der Rückseite her zur Montage in die Spannzange einzuführen und durch Drehen durch die Mitnehmerscheibe zu justieren.

Grundsätzlich ist die Herstellung einer abdichtenden Kontaktverbindung zwischen Justierschraube und Werkzeugspirale möglich, indem entweder an der Justierschraube oder aber in der benachbarten Stirnseite der Spirale ein Adapterkörper vorgesehen wird, der eine gezielte Strömungsmittelverbindung zwischen dem Kühlmittel-Eintrittsraum und den einzelnen Kühlkanälen der Spirale bereitstellt. Besonders vorteilhaft ist jedoch die Weiterbildung gemäß Patentanspruch 3, da auf diese Weise die Dichtung unabhängig von der Relativlage zwischen Hartmetallspirale und Justierschraube ist.

Der erfindungsgemäße Aufgabe des Bohrwerkzeuges hat insbesondere dann erhebliche Vorteile, wenn für die Werkzeugspirale hochwertige Werkstoffe, wie z. B. Vollhartmetall oder Schnellarbeitsstahl Verwendung finden. Die Spirale kann wesentlich öfter nachgeschliffen werden, als dies bei einstückigen Werkzeugen der Fall ist, so daß sich eine wirtschaftlichere Ausnützung des Werkstoffs ergibt. Durch Veränderung der Lage der Justierschraube kann dabei die Einspannlänge der Spirale variiert werden, so daß möglichst wenig Werkstoff verloren geht.

Nachstehend werden anhand schematischer Zeichnungen mehrere Ausführungsbeispiele der Erfindung näher erläutert. Es zeigen:

Figur 1    eine perspektivische, im Teilschnitt gezeigte Ansicht eines innengekühlten Bohrwerkzeugs mit einer Hartmetallspirale;

Figur 2    eine Seitenansicht der in Figur 1 gezeigten Hartmetallspirale;

Figur 3    eine Seitenansicht einer anderen Hartmetallspirale mit größerer Nutenzahl;

Figur 4    eine perspektivische Ansicht einer Mitnehmerscheibe für die Hartmetallspirale gemäß Figur 2;

Figur 5    eine Draufsicht auf einen Stützkörper für die Hartmetallspirale gemäß Figur 2;

Figur 6    eine Schnittansicht gemäß VI-VI in Figur 5;

Figur 7    in einer der Figur 4 ähnlichen Darstellung eine perspektivische Ansicht einer Mitnehmerscheibe für die Hartmetallspirale gemäß Figur 3;

Figur 8    eine Draufsicht eines Stützkörpers für die Hartmetallspirale gemäß Figur 3; und

Figur 9    einen Schnitt gemäß IX-IX in Figur 8.

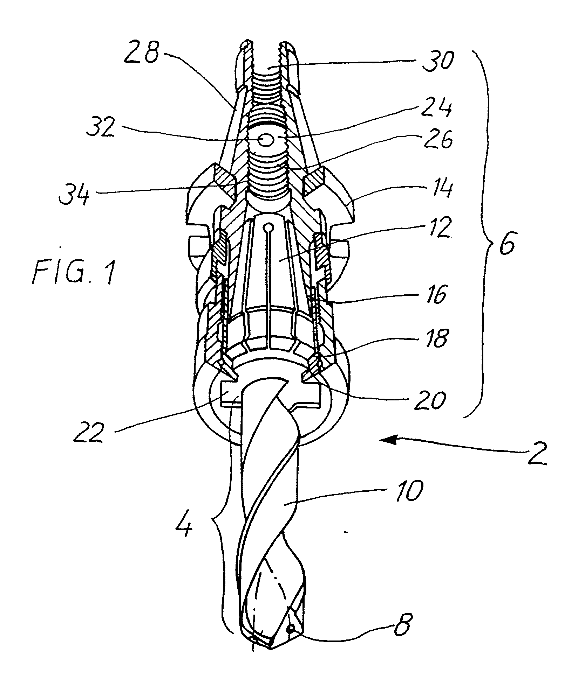

In Figur 1 ist mit dem Bezugszeichen 2 ein Bohrwerkzeug bezeichnet, das aus einer Hartmetallspirale 4 und einem Spannschaft 6 besteht. Die Hartmetallspirale 4 weist innenliegende Kühlkanäle 8 auf, die in den Bohrerstegen 10 verlaufen.

Der Spannschaft weist eine Spannzange 12 auf, die an die Außenkontur der Hartmetallspirale angepaßt ist, d.h. die im gespannten Zustand mit den innenliegenden Klemmflächen der Verjüngung der Hartmetallspirale mit einer Konizität von z.B. 1 : 1000 folgt. Die Spannzange 12 hat eine konische Außenfläche für das Zusammenwirken mit einem Innenkonus eines Futterkörpers 14, in den über ein Gewinde 16 eine Spannmutter 18 mit Druckring 20 schraubbar ist. Die Hartmetallspirale ist somit in einer sogenannten Doppelkonus-Spannzange aufgenommen, wobei die Klemmung an den Nebenschneiden der Hartmetallspirale erfolgt.

Zur Übertragung größerer Torsionsmomente ist im Druckring 20 über eine Klauenverbindung eine Mitnehmerscheibe 22 aufgenommen, deren Innenausnehmung dem Querschnitt der Hartmetallspirale 4 angepaßt ist. In der Darstellung gemäß Figur 1 befindet sich die Hartmetallspirale 4 noch nicht in der endgültigen Stellung. Sie kann bei gelöster Spannmutter 18 in das Innere des Spannfutters so weit eingedreht werden, bis sie in Anlagekontakt mit einer Justier-und Anschlagschraube 24 gelangt, deren Funktion nachstehend näher beschrieben werden soll.

Die Justierschraube 24 ist in einem Innengewinde 26 des Futterkörpers 14 aufgenommen, der in diesem Bereich einen Spannkonus 28 hat. Durch die Justierschraube 24 wird das Innengewinde 26 in zwei Räume unterteilt, von denen der der Hartmetallspirale 4 abgewandte Raum 30 als Kühl- und Schmiermittel-Eintrittsraum fungiert. Zur Kühlmittelversorgung der Hartmetallspirale weist die Justierschraube eine zentrische Durchgangsbohrung 32 auf, die in nachfolgend näher zu beschreibender Weise mit einem noch zu beschreibenden Stützkörper zusammenwirkt, um eine zum Raum 34 abgedichtete Strömungsmittelverbindung zu den Kühlkanälen zu schaffen.

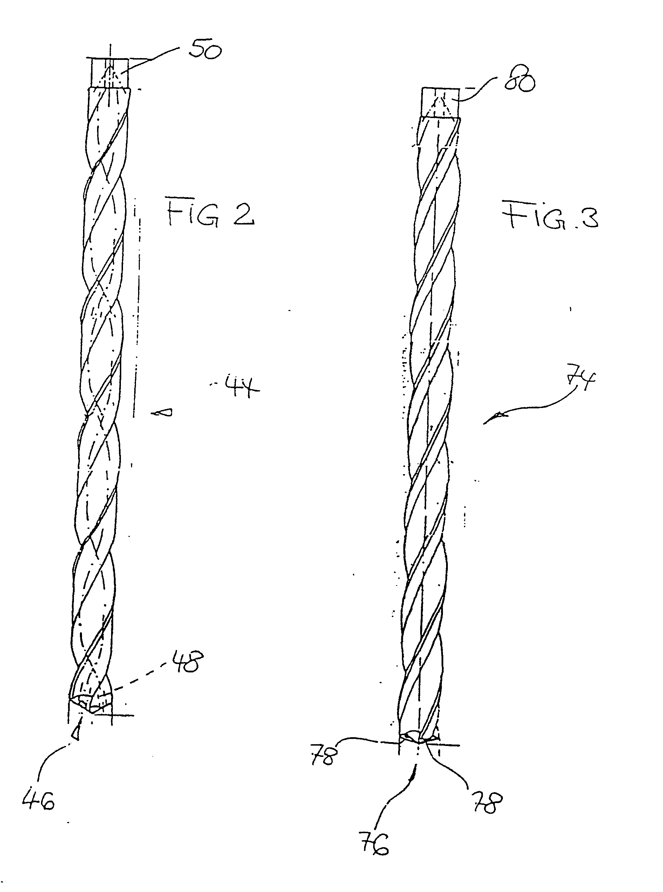

Nachfolgend soll auf die Figuren 2, 4 bis 6 näher eingegangen werden, die Teile einer ersten Ausführungsform des Bohrwerkzeugs zeigen. In Figur 2 ist mit dem Bezugszeichen 44 eine zweinutige Hartmetallspirale gezeigt, an deren Schneide 46 Kühlkanäle 48 austreten. Auf der der Schneide 46 abgewandten Seite trägt die Hartmetallspirale 44 einen in den Figuren 5 und 6 näher gezeigten Stützkörper 50, der im wesentlichen die Form eines Zylinders mit einer mittigen Durchgangsbohrung 52 hat. Auf der der Hartmetallspirale 44 zugewandten Seite 54 hat der Stützkörper 50 eine konische Ausnehmung 56, damit ein komplementär geformter Kegel auf seiten der Hartmetallspirale 44 formschlüssig eingreifen kann. Auf dieser Seite ist darüberhinaus eine diametral verlaufende Nut 58 vorgesehen, die radial so weit nach außen geführt ist, daß sie in Fluchtung mit den Mündungsöffnungen der Kühlkanäle 48 liegt. Der Stützkörper 50 ist vorzugsweise in fluchtender Lage der Nut 58 mit den Mündungsöffnungen der Kühlkanäle 48 auf die Hartmetallspirale 44 gelötet. Wenn die Hartmetallspirale somit mittels des Stützkörpers 50 über die Dichtfläche 60 gegen die Justierschraube 24 gedrückt wird, kann das Strömungsmittel aus dem Raum 30 ungehindert in die Kühlkanäle 48 strömen, ohne daß das Innere des Raumes 34 mit Kühlmittel beaufschlagt wird. Zur Verbesserung der Abdichtung kann entweder die Justierschraube 24 insgesamt aus Kunststoff bestehen oder aber zumindest auf der dem Stützkörper 50 zugewandten Seite eine Kunststoffbeschichtung haben.

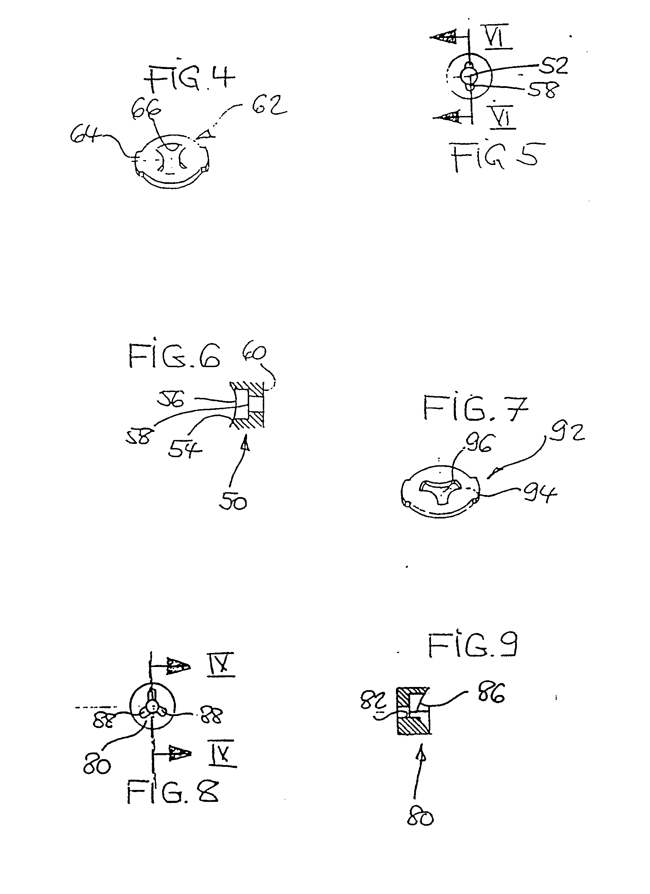

In Figur 4 ist eine perspektivische Ansicht einer Mitnehmerscheibe 62 gezeigt, die für die zweinutige Hartmetallspirale 44 gemäß Figur 2 gedacht ist. Mit dem Bezugszeichen 64 sind Klauen bezeichnet, die in Ausnehmungen des Druckrings des vorstehend beschriebenen Spannfutters eingreifen. Mit 66 ist eine Ausnehmung gekennzeichnet, deren Kontur dem Querschnitt der Hartmetallspirale 44 folgt.

Beim Zusammenbau des Bohrwerkzeugs geht man wie folgt vor: Zunächst wird in die Spannmutter 18 eine geeignete Mitnehmerscheibe 22 bzw. 62 eingelegt. Dann wird die Spannzange 12 eingeführt. Anschließend wird die Hartmetallspirale von hinten in die Spannzange und die Mitnehmerscheibe eingeführt bzw. eingeschraubt. Nun kann das Aufschrauben des gesamten Spannkopfs auf den Futterkörper erfolgen, wobei zuvor bereits die Lage der Justierschraube 24 festgelegt worden ist. Durch Anziehen der Spannmutter wird die Hartmetallspirale in axialer Richtung und in Umfangsrichtung festgelegt, wobei gleichzeitig eine Abdichtung der Bohrung 32 gegen den Raum 34 erfolgt.

In Figur 3 ist eine andere Hartmetallspirale 74 gezeigt, die sich von der Hartmetallspirale 44 gemäß Figur 2 dadurch unterscheidet, daß sie eine Spiralnut mehr hat. Auf der der Schneide 76 abgewandten Seite ist wiederum ein Stützkörper 80 vorgesehen, der im einzelnen in den Figuren 8 und 9 dargestellt ist. Auch dieser Stützkörper 80 hat eine zentrale Bohrung 82, die sich auf der der Hartmetallspirale 74 zugewandten Seite in drei sternförmig ausgebildete Nuten 88 erweitert. Die Nuten 88 sind wiederum radial so weit nach außen geführt, daß sie mit den Mündungsöffnungen der Kühlkanäle fluchten. Auch bei dieser Ausführungsform ist eine konische Ausnehmung 86 vorgesehen, in die mit Passung ein Kegelabschnitt der Hartmetallspirale 74 eingreift.

Die Ausführungsform gemäß Figur 3, 8 und 9 arbeitet in der gleichen Weise wie die vorstehend beschriebene Ausführungsform, so daß nicht näher darauf eingegangen werden soll. In Figur 7 ist noch eine perspektivische Ansicht einer passenden Mitnehmerscheibe 92 gezeigt, die mit Klauen 94 ausgestattet ist, deren Form identisch ist mit der Form der Klauen 64 gemäß Figur 4. Abweichend von der Mitnehmerscheibe gemäß Figur 4 ist die Innenausnehmung 96 so gestaltet, daß sie sich an die Querschnittskontur der dreinutigen Hartmetallspirale 74 anschmiegt und auf diese Weise nicht nur für eine formschlüssige Mitnahme sondern auch für eine Abdichtung der Innenseite des Spannfutters sorgt.

Abweichend vom beschriebenen Ausführungsbeispiel kann die Werkzeugspirale auch aus Schnellarbeitsstahl oder aus einem anderen Werkstoff bestehen. Die Werkzeugspirale kann auch aus mehreren Werkstoffen zusammengesetzt sein, wobei beispielsweise eine Hartmetall-Spiralspitze auf ein Träger-Spiralteil aufgesetzt ist. Ferner ist das beschriebene Konzept nicht auf zwei- oder dreischneidige Spiralen beschränkt. Vielmehr können auch mehrschneidige Spiralen Verwendung finden, ohne dadurch am grundsätzlichen Aufbau des Werkzeugs etwas zu ändern.

## Patentansprüche

1. Innengekühltes Bohrwerkzeug aus Werkzeugspirale und Spannschaft, mit folgenden Merkmalen:

a) die Werkzeugspirale ist in einer Ausnehmung des Spannschafts formschlüssig aufgenommen und über ihre im Ausnehmungsgrund liegende Stirnseite mit Kühlmittel versorgt;

b) die Werkzeugspirale (4; 44; 74) ist in einer Spannzange (12) aufgenommen;

c) die Spannzange (12) trägt auf der dem Spannschaft abgewandten Seite eine formschlüssig in die Spannuten eingreifende Mitnehmerscheibe (22; 62; 92);

d) die Mitnehmerscheibe (22; 62; 92) ist über eine Klauenverbindung in der Spannzange (12) aufgenommen;

e) der zugehörige Futterkörper (14) der Spannzange (12) weist ein zentrisches Innengewinde auf, in dem eine mit einer zentrischen Ausnehmung (32) versehene Justierschraube (24) angeordnet ist;

f) gegen die Justierschraube (24) ist die Werkzeugspirale drückbar, wobei eine Abdichtung ihrer Kühlkanäle (8; 48; 78) gegen den Innenraum (34) der Spannzange (12) erfolgt.

2. Bohrwerkzeug nach Anspruch 1, dadurch gekennzeichnet, daß die Backen der Spannzange (12) im geklemmten Zustand der Verjüngung der Werkzeugspirale (4; 44; 74) folgen.

3. Bohrwerkzeug nach Anspruch 1 oder 2, dadurch gekennzeichnet, daß die Werkzeugspirale auf der der Justierschraube (24) zugewandten Seite einen vorzugsweise aufgelöteten Stützkörper (50; 80) hat, der auf der der Werkzeugspirale zugewandten Seite eine konische Ausnehmung (56; 86) für den Eingriff einer komplementär geformten Stirnseite der Werkzeugspirale, sowie die Mündungsöffnungen der Kühlkanäle (8; 48; 78) mit einer zentrischen Durchgangsbohrung (52; 82) verbindende Ausnehmungen (58; 88) hat.

4. Bohrwerkzeug nach einem der Ansprüche 1 bis 3, dadurch gekennzeichnet, daß die Werkzeugspirale beim Anziehen der Spannzange (12) gegen die Justierschraube (24) spannbar ist.

5. Bohrwerkzeug nach einem der Ansprüche 1 bis 4, dadurch gekennzeichnet, daß der Spannzange (12) eine Spannmutter (18) zugeordnet ist, die einen Druckring beaufschlagt, in dem die Mitnehmerscheibe (22; 62; 92) aufgenommen ist.

6. Bohrwerkzeug nach einem der Ansprüche 3 bis 5, dadurch gekennzeichnet, daß die Justierschraube (24) zumindest auf der dem Stützkörper (50; 80) zugewandten Seite eine Kunststoffbeschichtung hat.

7. Bohrwerkzeug nach einem der Ansprüche 1 bis 6, dadurch gekennzeichnet, daß die Werkzeugspirale aus Vollhartmetall oder Schnellarbeitsstahl besteht.

8. Bohrwerkzeug nach einem der Ansprüche 1 bis 7, dadurch gekennzeichnet, daß die Werkzeugspirale mehrschneidig ausgebildet ist.

## Claims

1. Internally cooled drilling tool consisting of a tool helix and a clamping shank, with the following features:

    a) the tool helix is positively held in a recess in the clamping shank and supplied via its front end, which is disposed in the recess bottom, with coolant;

    b) the tool helix (4; 44; 74) is held in a collet chuck (12);

    c) the collet chuck (12) bears a driving plate (22; 62; 92), which engages positively in the flutes, on the side which is distant from the clamping shank;

    d) the driving plate (22; 62; 92) is held in the collet chuck (12) via a claw connection;

    e) the associated chuck body (14) of the collet chuck (12) comprises a central internal thread, in which a set screw (24), which is provided with a central recess (32), is arranged;

    f) the tool helix can be pressed against the set screw (24), as a result of which its cooling channels (8; 48; 78) are sealed off from the interior (34) of the collet chuck (12).

2. Drilling tool according to claim 1, characterised in that the jaws of the collet chuck (12) follow the taper of the tool helix (4; 44; 74) in the clamped state.

3. Drilling tool according to claim 1 or 2, characterised in that the tool helix has a preferably soldered-on support body (50; 80) on the side which faces the set screw (24), which body has a conical recess (56; 86) on the side which faces the tool helix for the engagement of a front face, which is of a complementary shape, of the tool helix, and recesses (58; 88), which connect the openings of the cooling channels (8; 48; 78) to a central through-hole (52; 82).

4. Drilling tool according to one of claims 1 to 3, characterised in that the tool helix can be held against the set screw (24) upon tightening the collet chuck (12).

5. Drilling tool according to one of claims 1 to 4, characterised in that a clamp nut (18) is associated with the collet chuck (12), which nut acts on a thrust collar which holds the driving plate (22; 62; 92).

6. Drilling tool according to one of claims 3 to 5, characterised in that the set screw (24) has a plastic coating at least on the side which faces the support body (50; 80).

7. Drilling tool according to one of claims 1 to 6, characterised in that the tool helix consists of solid carbide or high-speed steel.

8. Drilling tool according to one of claims 1 to 7, characterised in that the tool helix is multi-edged.

## Revendications

1. Outil de perçage à refroidissement interne composé d'une partie hélicoïdale d'outil et d'une tige de fixation, comportant les caractéristiques suivantes:

    a) la partie hélicoïdale d'outil est logée avec liaison géométrique dans un évidement de la tige de fixation et elle est alimentée en fluide de refroidissement par son côté frontal situé dans le fond de l'évidement;

    b) la partie hélicoïdale d'outil (4; 44; 74) est logée dans une pince de serrage (12):

    c) la pince de serrage (12) porte du côté situé à l'opposé de la tige de fixation, une rondelle d'entraînement (22; 62; 92) qui pénètre dans les rainures de dégagement de copeau en formant une liaison géométrique;

    d) la rondelle d'entraînement (22; 62; 92) est logée dans la pince de serrage (12) via une liaison par griffes;

    e) le corps (14) de mandrin correspondant de la pince de serrage (12) présente un filetage intérieur dans lequel est disposée une vis d'ajustement (24) munie d'un évidement central (32);

    f) la partie hélicoïdale d'outil peut être poussée contre la vis d'ajustement (24), une étanchéité de ses canaux de refroidissement par rapport à l'espace intérieur (34) de la pince de serrage (12), se trouvant réalisée.

2. Outil de perçage selon la revendication 1, caractérisé en ce que les mâchoires de la pince de serrage (12) suivent à l'état bloqué, la partie rétrécie de la partie hélicoïdale (4; 44; 74) d'outil.

3. Outil de perçage selon la revendication 1 ou 2, caractérisé en ce que la partie hélicoïdale d'outil comporte, du côté orienté vers la vis d'ajustement (24), un corps d'appui (50; 80), de préférence soudé sur elle, qui présente, du côté orienté vers la partie hélicoïdale d'outil, un évidement conique (56; 86) destiné à laisser pénétrer un côté frontal de forme complémentaire, de la partie hélicoïdale d'outil, ainsi que des évidements (58, 88) qui relient les orifices de sortie des canaux de refroidissement (8; 48; 78) avec un alésage de passage central (52; 82).

4. Outil de perçage selon une des revendications 1 à 3, caractérisé en ce que la partie hélicoïdale d'outil peut être serrée contre la vis d'ajustement (24) en vissant la pince de serrage (12).

5. Outil de perçage selon une des revendications 1 à 4, caractérisé en ce qu'à la pince de serrage (12) est affecté un écrou de serrage (18) qui met sous contrainte une rondelle de compression dans laquelle est logée la rondelle d'entraînement (22; 62; 92).

6. Outil de perçage selon une des revendications 3 à 5, caractérisé en ce que la vis d'ajustement (24) comporte une couche rapportée de matière plastique au moins sur le côté dirigé vers le corps d'appui (50; 80).

7. Outil de perçage selon une des revendications 1 à 6, caractérisé en ce que la partie hélicoïdale d'outil est en métal dur, ou en acier rapide.

8. Outil de perçage selon une des revendications 1 à 7, caractérisé en ce que la partie hélicoïdale d'outil a une conformation comportant plusieurs arêtes de coupe.

EP 0 283 698 B1

FIG. 1

FIG 2

FIG.3

FIG.4

FIG 5

FIG.6

FIG.7

FIG.8

FIG.9